# EUROPEAN PATENT APPLICATION

(11) **EP 2 679 786 A1**
(43) Date of publication of application: **01.01.2014**
(21) Application number: 12004854.1
(22) Date of filing: 28.06.2012
(51) Int. Cl.: F02C 9/28

(54) **Stand-by operation of a gas turbine**

(71) Applicant: Alstom Technology Ltd, 5400 Baden (CH)
(72) Inventor: Döbbeling, Klaus, 5210 Windisch (CH); Zajadatz, Martin, 79790 Küssaberg/Dangstetten (DE); Rueter, Andreas, 5415 Nussbaumen (CH)

(57) **Abstract**

The invention relates a method for operating a power plant with a single shaft gas turbine (6), in which the gas turbine (6) is operated at a constant speed which is below the speed at which the gas turbine (6) is turning when the first generator (25) is synchronized to an electric grid (39). The proposed method ensures good stable combustion with low emissions, a high turbine exhaust temperature, and minimized fuel consumption.

Besides the method, a power plant comprising a single shaft gas turbine (6) designed and configured to carry out such a method is an object of the invention.

## Description

### Field of the invention

The invention relates to a method for operation for a gas turbine power plant and to a gas turbine configured to carry out such a method.

### Prior art

At base load and high load modern gas turbines typically operate with lean premix flames to meet emission requirements. To assure a stable combustion for all operating conditions complex operating methods have been designed as for example known from the EP0718470.

Gas turbines and gas turbine combined cycles are considered to be very flexible. They can be loaded at a high rate subsequent to a fast start up. Depending on design and operating method a loading to base load in less than 10 minutes is feasible. These features are needed to balance fast changing load requirements from the consumers as well as changing supply from other power generation sources like for example wind energy such that electricity generation equals the electricity consumption at all times.

To operate with low emissions the combustor of a gas turbine has to be operated in a premixed mode. Single combustor Gas turbines for power generation typically can be operated in a premixed operating mode with low emission for load points above about 40% relative load (power output relative to the base load power output of the gas turbine). Gas turbines with sequential combustion can be operated in a premixed operating mode with low emission for load points down to the order of 10% relative gas turbine load. For steady operation below the above-mentioned relative load points the combustor can be operated with a diffusion flame. However, diffusion flames can lead to high emissions and operation under these conditions can be restricted by local legal authorities.

Operating a gas turbine or a gas turbine combined cycle power plant at the lowest possible load during periods of low electricity demand combined with a low electricity price has the advantage that fast loading can be done at any time with high loading gradients (50MW/min or more). Under these conditions the gas turbine's and the steam turbine's components are kept at material temperature levels, which allow fast loading with largely reduced lifetime consumption as compared to a start with ignition of a previously unfired gas turbine and cold steam turbine. This is especially true for combined cycle operation where the steam cycle components suffer from thermo-mechanical stresses if they are exposed to full load temperatures with fast loading gradients. Additionally, the risk of a failed start-up of the gas turbine is avoided, which is a considerable benefit.

However, the operation at low load can lead to considerable costs for the consumed fuel. At 40% relative load the fuel consumption can be between about 50% and 70% of the base load fuel consumption due to a part load efficiency, which is well below the base load efficiency. These fuel costs can be reduced by further load reduction. Further, at times of low demand the electric grid might not be able to accept the power produced by the power plant.

One prerequisite for fulfilling low load operation (operation at a relative load below 40%) is the combustion stability. However, lean premixing combustion, which is a preferred technology for dry NOx emission reduction, typically has a relatively narrow flammability range. The flammability limits of a lean premix flame are for example much narrower than those of a diffusion flame; typically they are about one order of magnitude smaller. The flammability limits describe the stability of flames.

In order to control the formation of oxides of nitrogen ("NOx") and to keep the flame in a stable range, it has been proposed to bypass a portion of the compressed air from the compressor section around combustors, especially during part-load operation. Such a bypass is for example known from the US5557920. However, air entering the turbine has a low temperature due to the admixing of bypass air and consequently the exhaust gas of the turbine has a low temperature compared to base load or high load conditions. Therefore steam produced in a subsequent boiler or heat recovery steam generator is cooler than at base load, which can lead to high thermal stresses in a steam turbine feed by the boiler or limitations, e.g. reduced load gradients or hold points, when loading the plant once the grid requires a power output.

### Summary of the invention

One aspect of the present disclosure is to propose a method for operation of a gas turbine plant at low load or no load with clean stable combustion. The gas turbine plant comprises a single shaft gas turbine with a compressor that pressurizes inlet air, which is mixed with fuel and ignited for generating combustion gases in a combustor, a turbine that extracts energy from the hot gases leaving the combustor, one shaft connecting the compressor and the turbine, and a first generator, which is mechanically coupled to the shaft of the gas turbine with a fixed transmission ratio. The gas turbine is designed to operate at a speed at which the gas turbine is turning when the first generator is synchronized to an electric grid. The gas turbine is operating at this design speed at least for high part load and base load.

Proposed is method for operating such a power plant with a single shaft gas turbine in a stand-by mode. According to the proposed method the gas turbine is operated at a constant speed, which is below the speed at which the gas turbine is turning when the first generator is synchronized to an electric grid.

By operation at reduced speed, i.e. a speed below the speed at which the gas turbine is turning when the first generator is synchronized, the compressor inlet mass flow can be reduced relative to the compressor inlet mass flow at synchronization speed. Due to the reduced inlet air mass flow the fuel to air ratio in the combustor can be increased, thus enabling stable combustion with low emissions and low fuel consumption. Further, the combustion pressure is reduced due to the reduced inlet air mass flow. The stand-by operation of a gas turbine with very low combustion pressure leads to a reduction in NOx emissions.

The proposed method allows good stable combustion with low emissions and a high turbine exhaust temperature. Because of the reduced mass flow the power consumption of the compressor is reduced. Therefore the turbine does not need to produce as much power to drive the compressor as to drive a compressor at synchronization speed. Therefore the reduced mass flow enables operation with low flue consumption. The high exhaust temperature can increase the efficiency of a subsequent steam cycle and therefore helps to further minimize the fuel consumption.

According to one exemplary embodiment of the method the gas turbine is operated at a speed between 20% and 85% of the speed when the first generator is synchronized to an electric grid.

According to a further exemplary embodiment of the method the gas turbine speed is controlled by applying a torque on the gas turbine's shaft by the first generator, which is operated as a motor via a static frequency converter.

In one embodiment of the method first generator is operated to deliver power to the electric grid via the static frequency converter. Since the generator is turning at a speed, which is below the normal operating speed, it produces an alternating current with a frequency, which is below the grid frequency. In order to deliver power to the grid the frequency is converted to the grid frequency by the static frequency converter.

In one exemplary embodiment of the method the first generator is operated to apply a positive torque on the shaft to drive the gas turbine. Since the generator is turning at a speed, which is below the normal operating speed, the grid frequency is higher that the frequency needed to operate the generator as a motor when the generator is turning at a frequency, which is below the grid frequency. In order to operate the generator as a motor alternating current with grid frequency is converted to the generator frequency by the static frequency converter. The alternating current with grid frequency can for example be provided by the grid or by a steam turbine of the power plant.

According to yet another embodiment of the method, which can be used for so called single shaft power trains with the gas turbine and steam turbine being arranged on single shaft, steam turbine power is used to provide a positive torque to drive the gas turbine.

For this method the steam produced by a heat recovery boiler, which is arranged downstream of the gas turbine to effectively use the waste heat of the gas turbine exhaust gas, exceeds the steam required to keep the steam turbine running at idle operation at the reduced speed. Alternatively steam provided from a second plant or other external source can be used or added to drive the steam turbine.

According to further exemplary embodiments of the method the gas turbine speed is controlled by adjusting a variable inlet guide vane, by adjusting the temperature of the compressor inlet air or by adjusting a blow off valve position. Each of these control methods can be applied individually or in combination with one or more of the others.

According to yet another exemplary embodiment of the method the temperature of the compressor inlet gas is increased relative to the temperature of ambient air to control the speed of the gas turbine.

The temperature of the compressor inlet gas can be increased for example by admixing compressor bleed air to the compressor inlet gas, or by heating it in an air pre-heater, or by recirculating flue gas of the gas turbine to the compressor inlet gas. Each of these temperature control methods can be applied individually or in combination with one or more of the others.

According to another exemplary embodiment of the method the gas turbine emissions are controlled by at least one of: adjusting the variable inlet guide vanes, adjusting the blow off valve, adjusting the speed of the gas turbine, adjusting the temperature of the compressor inlet gas, or modulating the flame temperature spatial distribution by adjusting a stage ratio for staged burners or a fuel supply to individual burners. All of these methods used alone or in combination have a direct influence of the flame. In particular the combustor inlet temperature and therefore the flame position, flame location and maximum flame temperature can be adjusted by these methods.

For operation of a combined cycle power plant it is important to control the exhaust temperature of the gas turbine. The gas turbine exhaust temperature directly affects the exhaust ducting and the heat recovery steam generator downstream of the gas turbine. Further, the steam temperature of steam generated by heat recovery steam generator depends on the exhaust temperature. The steam temperature should be kept in an operating range to avoid or limit thermal stresses in the steam turbine due to steam temperature changes.

According to one exemplary embodiment of the method the gas turbine exhaust temperature is controlled to a target value. The exhaust temperature is controlled by at least one of adjusting the variable inlet guide vanes, by adjusting the temperature of the compressor inlet gas, by adjusting the blow off valve, by adjusting the speed of the gas turbine or by adjusting the temperature of the compressor inlet gas.

Besides the method for operating a power plant in a stand-by mode, a method for operation in which the gas turbine is accelerated from stand-by mode to synchronized speed, idle, loading and load operation as well as load reduction, idle operation, and deceleration to stand-by mode are subject of the disclosure.

According to an exemplary embodiment of the method, the gas turbine combustor is operated in a premix mode for stand-by operation of the gas turbine at a speed, which is below the speed at which the gas turbine is turning when the first generator is synchronized to an electric grid, and the combustor is operated with a diffusion flame or in a premix mode with a diffusion flame for stabilization during run up to idle operation with synchronization speed, at idle with synchronization speed, and at low part load. According to this embodiment the combustor can be operated in a premix mode for base load and high part load operation. Depending on the design and operating conditions part of the acceleration to synchronization speed can be carried out in a premix mode. The method for operation at idle with synchronization speed and loading as well as load operation can be carried out according to conventional operating concept for the gas turbine.

Load reduction can be done in reverse order: The combustor is operated with a diffusion flame or in a premix mode with a diffusion flame for stabilization during run down from idle with synchronization speed. During run down or when reaching the stand-by operation of the gas turbine at a speed, which is below the speed at which the gas turbine is turning when the first generator is synchronized to an electric grid, the gas turbine combustor is operated in a premix mode for low emissions.

Besides the method for operating, a gas turbine plant designed to carry out such a method is a subject of the disclosure.

According to one exemplary embodiment such a power plant comprises a single shaft gas turbine with a compressor, a combustor, a turbine, one shaft connecting the compressor and the turbine, and a first generator, which is mechanically coupled to the shaft of the gas turbine with a fixed transmission ratio. Such a plant is characterized in that the gas turbine is designed for continuous operation at a speed, which is at least 10% below the design speed of the gas turbine. It can for example be designed for an operation in a window between 20% and 85% speed. The design speed is the speed at which the gas turbine is turning when the generator is synchronizes to the electric grid.

According to a further embodiment the shaft, the blades and vanes of the compressor and turbine are designed for an operating window free of first order Eigenfrequencies at a speed, which is at least 10% below the design speed of the gas. The operating window can for example be in a speed range between 20% and 85% speed. The frequency range of the operating window can be much smaller than this range. For example it is only +/- 1 % speed. This design allows continuous operation at reduced speed. Preferably the window is larger, e.g. +/- 5 to 10 % or larger.

To improve operational flexibility during standby operation the shaft as well as the blades and vanes of the compressor and turbine can be designed to be free of at least first and second order Eigenfrequencies for an operating window of at least +/- 2 percent speed around an operating point with a speed, which is at least 10% below the design speed of the gas turbine according to yet another exemplary embodiment.

The disclosed method as well as the disclosed gas turbine plant allow operation of a gas turbine with a stable low emission flame in the combustor at reduced speed relative to the synchronization speed. Thereby fuel consumption can be reduced relative to idle or low load operation at synchronization speed while still maintaining low emissions. As a consequence operation for an extended period of time is possible and economical in this mode.

Further, reduced fuel consumption can be realized while still maintaining low emissions and achieving turbine outlet temperatures that are suitable to keep a combined cycle at operating temperatures that allow fast loading of the combined cycle power plant including the steam turbine.

Additionally, a reduced fuel consumption can be realized while still maintaining low emissions and achieving turbine outlet temperatures and exhaust mass flow that are suitable to run the combined cycle at a minimum load required to cover own consumption and any house load required by the specific site.

The above described gas turbine can be a single combustion gas turbine or a sequential combustion gas turbine as known for example from EP0620363 B1 or EP0718470 A2. The disclosed method can be applied to single combustion gas turbine or a sequential combustion gas turbine.

### Brief description of the drawing

The invention, its nature as well as its advantages, shall be described in more detail below with the aid of the accompanying drawings. Referring to the drawings:
Fig. 1 shows an example of a gas turbine o according to the present invention,
Fig. 2 shows an example of the effect of pressure on NOx emissions in a gas turbine.

### Ways of implementing the invention

The same or functionally identical elements are provided with the same designations below. The values and dimensional specifications indicated are only exemplary values and do not constitute any restriction of the invention to such dimensions.

The example of a power plant for execution of the proposed method comprises a conventional CCPP (combined cycle power plant).

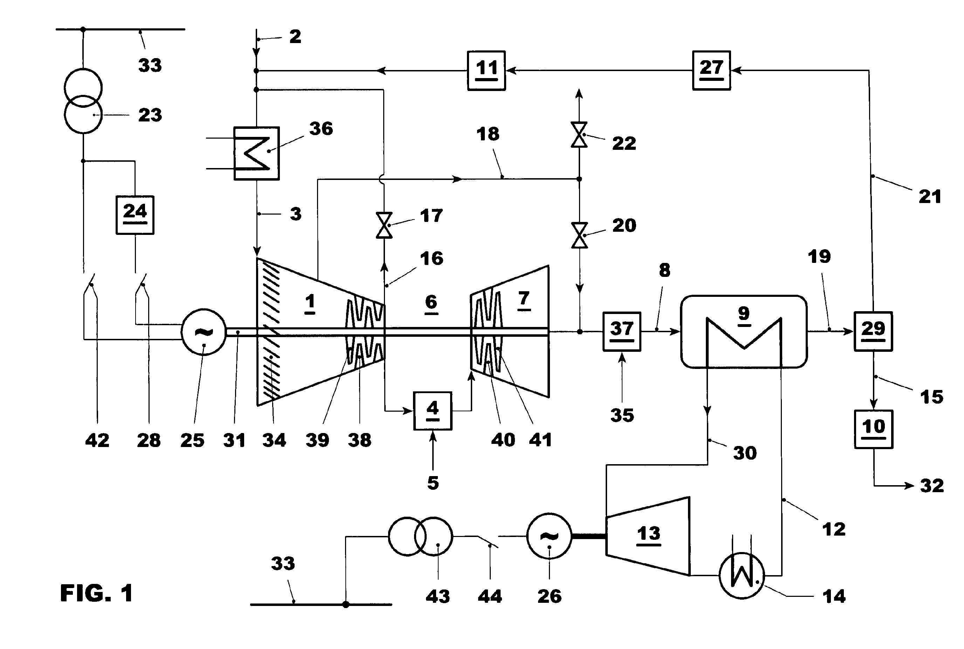

An exemplary arrangement is shown in Fig. 1. The gas turbine 6 is supplied with compressor inlet gas 3, and fuel 5. The compressor inlet gas 3 is compressed by rotating blades 39 and vanes 38 in a compressor 1. The compressed gas is used for combustion of the fuel 5 in a combustor 4, and the pressurized hot gases expand in a turbine 7. During expansion in the turbine 7 the pressurized hot combustion gas is guided by turbine vanes 40 and drives the turbine blades 41 to deliver mechanical power. The compressor and turbine are arranged on one shaft 31. The generator 25 is also mechanically coupled to the shaft 31. Between the gas turbine 6 and the generator 25 a gear can be arranged (not shown).

In this example the gas turbine's hot exhaust gas 8 (also called flue gas) pass through a HRSG 9, which generates live steam 30 for a steam turbine 13. The steam turbine 13 is either arranged in a single shaft configuration with the gas turbine 6 and the first generator 25, or as shown here, is arranged in a multi shaft configuration to drive a second generator 26. The steam leaving the steam turbine 13 is sent to a condenser 14 and returned to the HRSG 9. The steam cycle is simplified and shown schematically without different steam pressure levels, feed water pumps, etc., as these are not subject of the invention.

Different possibilities to increase the temperature of the compressor inlet gas are shown in Fig. 1. The compressor inlet gas 3 can be heated by heat exchange in an air-pre-heater 36 before entering the compressor 1. It can also be heated by admixing compressor bleed air 16 to the compressor inlet gas. The inlet gas is heated during compression in the compressor 1. By controlling the bleed air flow with a bleed air control valve 17 the temperature of the compressor inlet air can be adjusted. The compressor bleed air can be taken from the compressor exit as or from an intermediate position of the compressor 1. The temperature of the compressor inlet gas 3 can also be adjusted or controlled by recirculation of flue gas. Recirculated flue gas 21 of the flue gases from the HRSG 19 is recirculated to the inlet of the compressor 1 of the gas turbine 6 where it is mixed with ambient air 2. The recirculated flue gas 21 can be cooled in the recirculation flue gas re-cooler 27 before mixing with the ambient air 2. The temperature of the compressor inlet gas 3 can be controlled by controlling the mass flow of recirculated flue gas 21 and by controlling the temperature to which the recirculated flue gas is cooled in the recirculation flue gas re-cooler 27.

In the case of flue gas recirculation the compressor inlet gas 3 is a mixture of ambient air 2, and flue gas, which is recirculated via a flue gas recirculation line. The remaining flue gas 15 of the flue gases from the HRSG 19 is directed to the stack 32 by the flue gas splitter 29 and discharged to the environment. Optionally a CO2 capture unit 10 can be installed between flue gas splitter 29 and the stack 32. This CO2 capture unit can comprise a flue gas blower, a further flue gas blower and a CO2 capture unit. In the CO2 capture unit CO2 is removed from the flue gas. The remaining flue gas can be released to the atmosphere and the CO2 can be compressed for transportation, and storage. There are several technologies known to remove CO2 from a flue gas such as absorption, adsorption, membrane separation, and cryogenic separation.

Further, a variable speed flue gas blower for recirculation 11 is installed downstream of the recirculation flue gas cooler 27 before mixing the recirculated first partial flow 21 of the flue gases with the ambient air 2.

Control of the mass flow in the combustor 4 is one of the main parameters for controlling combustion. Since the compressor inlet mass flow is inversely proportional to the inlet temperature, the mass flow in the combustor can be indirectly control by adjusting the compressor inlet temperature with the measures disclosed above. The compressor inlet mass flow 3 can be directly controlled by adjusting the VIGV 34 (variable inlet guide vanes) or by adjusting the speed of the shaft 31 and thereby controlling the mass flow in the combustor 4. Further, the mass flow in the combustor can be controlled by controlling the compressor blow off 18 and/or the compressor bleed air 16.

Control of the hot gas temperature in the combustor 4 is one of the main parameters for controlling combustion. The hot gas temperature can be controlled by controlling the fuel mass flow 5 in the combustor 4 or by controlling the fuel to air ratio. Further, it can be controlled by adjusting the combustor inlet temperature. The local hot gas temperature can be controlled by modulation of the flame temperature spatial distribution e.g. changing the stage ratio (for staged combustors/burners) or by switching of stages in burner groups (not shown).

The pressure in the combustor 4 is another main parameter, which influences combustion and in particular the NOx formation. The pressure in the combustor 4 can be adjusted by the combined control of the combustor mass flow and the turbine inlet temperature.

The first generator 25 can be connected to the electric grid 33 via a SFC (static frequency converter) 24 and a power switch for the SFC28 to apply a torque on the shaft 31 and thereby control the speed of the shaft 31. Typically the voltage of the electric grid 33 is higher than the output, respectively input voltage of the generator 25; therefore the generator can be connected to the grid via a step-up transformer 23. The SFC 24 can be controlled to drive the generator as a motor using electric power from the electric grid 33 and to operate the generator to deliver electric power, convert it to the grid frequency and to supply power to the electric grid 33.

For load operation when the generator 25 is synchronized to the electric grid 33, the power switch for the SFC 28 generator is opened and the generator 25 is connected to the grid via the generator-breaker 42. Generator excitation and auxiliaries are not shown as they are not part of the invention.

In the example shown, 1 the steam turbine 13 is connected to the electric grid 33 via a steam turbine generator breaker 44 and steam turbine step up transformer 43.

A control of the gas turbine's exhaust gas temperature is advantageous because the steam temperature of the steam generated in the HRSG 9 depends on the exhaust gas temperature. To operate the steam turbine 13 a minimum steam temperature should be maintained and fast temperature gradients should be avoided. The exhaust temperature can be controlled by controlling the turbine inlet temperature or hot gas temperature, or the pressure ratio over the turbine 7, which itself is a function of the turbine mass flow or combustor exit mass flow and the turbine inlet temperature.

If the turbine exit temperature is too low to generate steam with a sufficiently high temperature the temperature of the flue gas entering the HRSG 9 can be increased by burning supplementary fuel 35 in the supplementary firing 37.

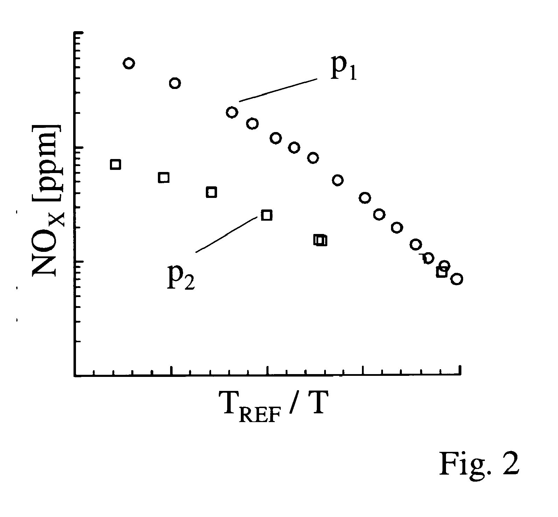

One important feature of the proposed method is the operation of a gas turbine 6 with very low combustion pressure to reduce NOx emissions during stand-by operation. The NOx emissions are shown as a function of the temperature i.e. the ratio of a reference temperature T_{REF} to the hot gas temperature T in Fig. 2 for two different combustion pressures p₁, p₂ where p₂ is lower than p₁. Fig. 2 clearly shows that the NOx emissions can be reduced at high combustion temperatures T or low T_{ref}/T by reducing the combustion pressure.

It will be appreciated by those skilled in the art that the present invention can be embodied in other specific forms without departing from the spirit or essential characteristics thereof. The presently disclosed embodiments are therefore considered in all respects to be illustrative and not restricted.

### Designations

- 1: Compressor
- 2: Ambient air
- 3: Compressor inlet gas
- 4: Combustor
- 5: Fuel
- 6: Gas Turbine GT
- 7: Turbine
- 8: Exhaust gas
- 9: HRSG (heat recovery steam generator)
- 10: CO2 capture system (optional)
- 11: Flue gas blower for recirculated flue gas
- 12: Feed water
- 13: Steam turbine
- 14: Condenser
- 15: Flue gas (to environment)
- 16: Compressor bleed air
- 17: Compressor bleed air control valve
- 18: Compressor blow off
- 19: Flue gas from HRSG
- 20: Blow off control valve to gas turbine exhaust duct
- 21: Recirculated flue gas
- 22: Blow off control valve to silencer
- 23: Step-up transformer
- 24: Static frequency converter
- 25: First generator
- 26: Second generator
- 27: Recirculation flue gas re- cooler
- 28: Power switch for SFC
- 29: Flue gas splitter
- 30: Live steam
- 31: Shaft
- 32: Stack
- 33: Electric grid
- 34: Variable inlet guide vane
- 35: Supplementary fuel
- 36: Air-preheater
- 37: Supplementary firing
- 38: Compressor vane
- 39: Compressor blade
- 40: Turbine vane
- 41: Turbine blade
- 42: Generator-breaker
- 43: Steam turbine step-up transformer
- 44: Steam turbine generator breaker

- CCPP: Combined cycle power plant
- *T_{REF}*: *hot gas temperature*
- *T*: *hot gas temperature*

## Claims

1. A method for operating a power plant with a single shaft gas turbine (6), wherein the single shaft gas turbine (6) comprises a compressor (1) that pressurizes inlet air (3), which is mixed with fuel (5) and ignited for generating combustion gases in a combustor (4), a turbine (7) that extracts energy from the hot gases leaving the combustor (4), one shaft (31) connecting the compressor (1) to the turbine (7), and a first generator (25), which is mechanically coupled to the shaft (31) of the gas turbine (6) with a fixed transmission ratio, **characterized in that** the gas turbine (6) is operated at a constant speed, which is below the speed at which the gas turbine (6) is turning when the first generator (25) is synchronized to an electric grid (39).

2. Method according to claim 1, **characterized in that** the gas turbine (6) is operating at a speed between 20% and 85% of the speed when the first generator (25) is synchronized to an electric grid (39).

3. Method according to claim 1 or 2, **characterized in that** the gas turbine speed is controlled by at least one of the following:
applying a torque on the shaft (11) by the first generator (25) which is controlled by a static frequency converter (24),
adjusting a variable inlet guide vane (34),
adjusting the temperature of the compressor inlet air (3),
adjusting a blow off control valve (20, 22) position.

4. Method according to one of the claims 1 to 3, **characterized in that** the first generator (25) is operated to deliver power to the electric grid (33) via the static frequency converter (24).

5. Method according to one of the claims 1 to 3, **characterized in that** the first generator (25) is operated to apply a positive torque on the shaft (11) to drive the gas turbine (6) via the frequency converter (24).

6. Method according to one of the claims 1 to 5, **characterized in that** gas turbine (6) plus steam turbine (13) are arranged on a single shaft and steam turbine power is used to drive the gas turbine (6).

7. Method according to one of the claims 1 to 5, **characterized in that** the temperature of the compressor inlet gas (3) is increased relative to the temperature of ambient air (2).

8. Method according to claim 7, **characterized in that** the the temperature of the compressor inlet gas (3) is increased by at least one of following:
admixing compressor bleed air (16) to the compressor inlet gas (3),
heating the inlet gas (3) by heat exchange in an air pre-heater (36),
admixing recirculated flue gas (21) to the compressor inlet gas (3).

9. Method according to one of the preceding claims, **characterized in that** the gas turbine emissions are controlled by at least one of the following:
adjusting the variable inlet guide vanes (34),
adjusting the blow off valve position (20, 22),
adjusting the speed of the gas turbine (6),
adjusting the temperature of the compressor inlet gas (3),
modulating the flame temperature spatial distribution by adjusting a stage ratio for staged burners or a fuel supply to individual burners.

10. Method according to one the preceding claims, **characterized in that** the gas turbine exhaust temperature is controlled by at least one of the following:
adjusting the variable inlet guide vanes (34),
the temperature of the compressor inlet gas (3),
adjusting the blow off control valve (20, 22),
adjusting the speed of the gas turbine (6),
adjusting the temperature of the compressor inlet gas (3).

11. A method for operating a power plant comprising a single shaft gas turbine (6) with a compressor (1) that pressurizes inlet air (3), which is mixed with fuel (5), and ignited for generating combustion gases in a combustor (4), a turbine (7) that extracts energy from the hot gases leaving the combustor (4), one shaft (31) connecting the compressor (1) and the turbine (7), and a first generator (25), which is mechanically coupled to the shaft (31) of the gas turbine (6) with a fixed transmission ratio, **characterized in that** the combustor (4) is operated in a premix mode (6) during operation at a constant speed, which is below the speed at which the gas turbine (6) is turning when the first generator (25) is synchronized to an electric grid (39), and **in that** the combustor (4) is operated with a diffusion flame or in a premix mode with a diffusion flame for stabilization during run up to idle, at idle, and at low part load,
and **in that** the combustor (4) is operated in a premix mode for base load and high part load operation.

12. A power plant comprising a single shaft gas turbine (6) with a compressor (1), a combustor (4), a turbine (7), one shaft (31) connecting the compressor (1) and the turbine (7), and a first generator (25), which is mechanically coupled to the shaft (31) of the gas turbine (6) with a fixed transmission ratio, **characterized in that** the gas turbine (6) is designed for continuous operation with the combustor ignited at a constant speed, which is at least 10% below the design speed of the gas turbine (6).

13. A power plant according to claim 12, **characterized in that** the shaft (31), as well as the blades and vanes of the compressor (1) and turbine (7) are designed for an operating window free of first order Eigenfrequencies at a speed which is at least 10% below the design speed of the gas turbine (6).

14. A power plant according to claim 12 or 13, **characterized in that** the shaft (31) and the blades and vanes of the compressor (1) and turbine (7) are designed to be free of at least first and second order Eigenfrequencies for an operating window of at least +/- 2 percent speed around an operating point with a speed which is at least 10% below the design speed of the gas turbine (6).
